Europäisches Patentamt

European Patent Office

Office européen des brevets

(11) Publication number: **0 113 055**
**B1**

# EUROPEAN PATENT SPECIFICATION

(45) Date of publication of patent specification: **16.09.87**

(21) Application number: **83111996.1**

(22) Date of filing: **30.11.83**

(51) Int. Cl.⁴: **A 23 L 2/02,** C 12 P 1/04,
A 23 L 2/30

(54) **Lactobacillus beverage and production thereof.**

(30) Priority: **30.11.82 JP 210206/82**

(43) Date of publication of application:
**11.07.84 Bulletin 84/28**

(45) Publication of the grant of the patent:
**16.09.87 Bulletin 87/38**

(84) Designated Contracting States:
**DE GB**

(56) References cited:
**DE-A-1 926 166**
**DE-A-2 520 792**
**FR-A-1 178 657**
**FR-A-2 125 539**
**GB-A-2 057 846**
**NL-C- 82 509**
**US-A-1 417 412**
**CHEMICAL ABSTRACTS, vol. 88, no. 13, March**
**1978, page 386, no. 87923s, Columbus, Ohio,**
**US**

**L.M. GRANDERYE: "Dictionnaire de chimie",**
**1962, Dunod, Paris, FR**

(73) Proprietor: **KIRIN BEER KABUSHIKI KAISHA**
**26-1 Jingumae 6-chome**
**Shibuya-ku Tokyo-To (JP)**

(72) Inventor: **Niwa, Motohiro c/o Kirin Beer**
**Kabushiki Kaisha**
**Beer Kagaku Kenyusho 3, Miyahara-Cho**
**Takasaki-Shi Gunma-Ken (JP)**
Inventor: **Matsuoka, Michiko c/o Kirin Beer**
**Kabushiki Kaisha**
**Beer Kagaku Kenyusho 3, Miyahara-Cho**
**Takasaki-Shi Gunma-Ken (JP)**
Inventor: **Katayama, Hiroyuki c/o Kirin Beer**
**Kabushiki Kaisha**
**Beer Kagaku Kenyusho 3, Miyahara-Cho**
**Takasaki-Shi Gunma-Ken (JP)**

(74) Representative: **Reichel, Wolfgang, Dipl.-Ing.**
**et al**
**Reichel und Reichel Parkstrasse 13**
**D-6000 Frankfurt am Main 1 (DE)**

Courier Press, Leamington Spa, England.

# 0 113 055

**Description**

Background of the invention

This invention relates to a lactobacillus beverage of a low pH value containing substantially no milk component and to a method for production thereof.

In recent years, the effect of lactobacilli on health has been recognized anew, with emphasis coming to be imposed on the significance of positively ingesting lactobacilli through beverages and foods. The lactobacilli for beverages and foods are homofermentative.

From such a point of view, a lactobacillus beverage obtained by proliferation of a lactobacillus in a fruit juice may be stated to be a preferable one, because not only is it a source for supplying the lactobacillus, but also the fruit juice itself has its nutritional value.

However, while fruit juices have generally low pH's, there are only very limited species of lactobacilli proliferable in a fruit juice of a low pH value, and therefore it is commonly accepted that lactobacilli undergo almost no proliferation or are killed in a fruit juice. Particularly, proliferation of useful bacteria in the intestines such as *Lactobacillus casei* and *Lactobacillus acidophilus* in a fruit juice has been considerably difficult.

Accordingly, the only method for proliferation of lactobacilli of the prior art was to elevate the pH value, and this measure has been applied in one of the bioassays for detecting adulteration of a fruit juice. However, the method for proliferating lactobacilli by elevating the pH value of a fruit juice involves some drawbacks and is not suitable for utilization in the production of a beverage. For example, increasing the pH value of a fruit juice will increase the risk of contamination with miscellaneous bacteria, and sterilization treatment after increasing of the pH value will result in marked coloration (discoloration into brown) of the fruit juice and generation of a heat oder, whereby flavor will be markedly impaired.

For the above reasons, a commercially available beverage comprising a combination of a fruit juice and a lactobacillus is prepared by proliferating the lactobacillus in an animal milk and adding the fruit juice thereto (less than 3.0% of defatted milk solids according to a regulatory law in Japan). However, the lactobacillus in such a milk beverage containing a fruit juice has a drawback in that the number of microorgansisms will be reduced with the elapse of time because of some bacteriostatic components in the fruit juice, and therefore strict storage conditions (need for cooling, and short shelf life) must be met for maintenance of the microorganism number in the lactobacillus beverage.

It has been commonly accepted in the art that no lactobacillus beverage containing no milk component can be produced. However, in view of the spirit of the regulatory law, which ordains that beverages containing fruit juice must have a content of defatted milk solids less than 3.0%, this kind of beverage is essentially a fruit juice beverage, in which the presence of a milk component is essentially not required. Thus, it would be very beneficial to the art, if proliferation of a lactobacillus could be rendered possible by inoculation thereof directly into a fruit juice, since the non-essential step of cultivation in an animal milk for proliferation of a lactobacillus is obviously disadvantageous.

Summary of the invention

An object of the present invention is to provide a solution to the above described problem, and it is intended to achieve this object by removing effectively the bacteriostatic components in a fruit juice.

Accordingly, the lactobacillus beverage according to the present invention comprises a product of lactic acid fermentation of a fruit juice containing substantially no milk component and has a content of a homotype lactobacillus microorganism of at least $10^6$/ml and a pH of 4.0 at the highest.

The method for producing the lactobacillus beverage according to the present invention comprises bringing a fruit juice into contact with a solid agent selected from the group consisting of amide resins, diatomaceous earths, activated carbons and anion-exchange resins which comprise resins having quaternary ammonium groups and then proliferating a homofermentative lactobacillus in the fruit juice at a pH of 4.0 at the highest substantially in the absence of a milk component until the content of lactobacillus becomes at least $10^6$/ml.

The conditions of (1) a content of homofermentative lactobacillus microorganisms of $10^6$/ml or more, (2) a pH of 4.0 or lower value and (3) the absence of a milk component could not be satisfied at the same time in the prior art. From US patent No. 1 417 412 there is known a fruit juice in which lactic acid has been developed by fermentation of Bacillus bulgaricus and a method for preparing it which consists in subjecting a fruit juice to lactic acid fermentation eventually after neutralisation of the acid in the fruit juice by addition of a soluble or insoluble neutralising agent.

In contrast thereto, simultaneous satisfaction of the three above-mentioned conditions has been realized by treatment of a fruit juice with a specific solid agent. In view of the fact as mentioned above that the low pH value of a fruit juice has been considered as the cause for inhibiting the proliferation of lactobacillus, that lactobacillus can be proliferated under the low pH conditions of 4.0 or less according to the present invention, whereby direct inoculation thereof into a fruit juice is rendered possible, can be said to be an unanticipated discovery.

The lactobacillus beverage according to the present invention can withstand storage for a long period. For example, when it is sealed in a glass bottle with shielding from light, no reduction in the number of living organisms is ordinarily observed even when it is left to stand at 20°C for 50 days. More specifically,

2

the lactobacillus beverage according to the present invention generally contains lactobacilli in a number of $10^8$/ml, exceeding the number of lactobacilli $10^6$/ml required as the component standard for the lactobacillus in this kind of beverage with less than 3.0% of defatted milk solids, and no reduction in the number of living microorganisms can be seen in a bottled product thereof even when it is stored at room temperature for 50 days.

The lactobacillus beverage according to the present invention, which also belongs to the category of fruit juice beverages, is also improved in respect of the "cooked flavor" which is a problem as off-flavor in fruit juice beverages.

Detailed description of the invention

Fruit juice

Examples of fruit juices suitable for use in the present invention are those having low pH values, particularly juices of citrus fruits such as grapefruit juice, orange juice, mandarin orange juice, apple juice and grape juice.

The fruit juice content in the fruit juice preparation to be subjected to lactobacillus fermentation is generally 50 to 100% by weight.

The pH of these fruit juices is, for example, about 3.6 or less for orange juice, about 3.6 or less for mandarin orange juice, about 3.7 or less for apple juice, and 3.3 or less for grape juice.

The fruit juice to be provided for the treatment according to the present invention may be either one immediately after squeezing, containing pulp, or one from which pulp has been removed by such an operation as centrifugation. In view of convenience in the operation for treatment with a solid agent, it is preferred to use a fruit juice from which pulp has been removed.

Solid agent

It is presumed that the solid agent to be used in the present invention makes the bacteriostatic components in a fruit juice harmless by adsorption or some other mechanism. However, the present invention will not be bound by any such theory.

The solid agent to be used in the present invention is an amide resin, a diatomaceous earth, an activated carbon, or a "strongly basic" anion-exchange resin which comprises a resin having quaternary ammonium groups. The former two are preferable.

The term "amide resin" herein means a solid resin having amide bonding in the main chain or the side chain thereof. More specifically, for example, polyamides and insolubilized polyvinyl pyrrolidones are suitable. Examples of polyamides are nylon 6, nylon 66, and nylon 11. From the standpoint of availability, the former two are preferred. Insolubilized polyvinyl pyrrolidones are prepared by insolubilizing polyvinyl pyrrolidones which are natively soluble in water by heating.

The diatomaceous earth may be any one which can be used for treatment of foods. Typical examples are Celite® 503, Hyflo Super-Cel®, and Filter Cell®. The diatomaceous earth seems to be particularly suitable for treatment of orange juice among various fruit juices.

Activated carbon may be any one which can be used for treatment of foods.

Anion-exchange resins may be any one which comprises resin having quaternary ammonium groups. The resins to have quaternary ammonium groups are preferably crosslinked polymers such as styrene-divinylbenzene copolymers. Examples of anion-exchange resins of this type are Dowex®1 manufactured by Dow Chemical, U.S.A., and Amberlite® IRA-402 manufactured by Rohm and Haas Co., U.S.A.

Contact of solid agent with fruit juice

Contact between the solid agent and the fruit juice can be performed by any desired mode as long as its effect, that is, proliferation of lactobacilli in a low pH fruit juice, can be recognized.

According to one mode, a powdery or granular solid agent is added to a fruit juice, which is then stirred. The amount of the solid agent is ordinarily about 0.5 to 3% by weight of the fruit juice. By stirring the slurry at a temperature around room temperature for 10 to 30 minutes, the intended object can be accomplished. After the treatment, the fruit juice can be recovered by a conventional procedure such as filtration, etc.

According to another mode for attaining contact, a fruit juice is passed through a layer of a powdery or granular solid agent. Filtration may be performed once or several times so that the contact time as mentioned above can be ensured at a temperature around room temperature. This system is suitable when employing a porous diatomaceous earth as the solid agent.

Proliferation of lactobacillus

The fruit juice treated as described above is now capable of proliferating a lactobacillus.

Proliferation of the lactobacillus is essentially the same as lactic acid fermentation in the prior art except that it is conducted in a fruit juice. Thus, the treated fruit juice (pH 4.0 or less) as described above is subjected to a sterilizing treatment (e.g., 90° C/1 minute), cooled, inoculated with an appropriate amount of the lactobacilli, and cultured at an appropriate temperature, for example, around 35°C, until the content of the lactobacilli becomes $10^6$/ml or more, that is, ordinarily for 2 to 3 days.

3

The lactobacillus to be used in the present invention is a homofermentative lactobacillus. Specific examples are those belonging to the genus *Lactobacillus,* lactobacillus cocci such as those belonging to the genus *Streptococcus* and the genus *Pediococcus*. Among them, representative are those belonging to the genus *Lactobacillus*, which are useful bacteria in the intestines, typically *L. casei, L. acidophilus* and *L. bulgaricus.* Proliferability of lactobacillus seems to vary somewhat depending on the kind of the solid agent employed for treatment of the fruit juice. For example, of the three species of the genus *Lactobacillus* as mentioned above, the last one is better in proliferability in a fruit juice treated with an amide resin.

Post-treatment and utilization of the lactobacillus beverage produced

The lactobacillus beverage obtained as described above may be made into the final form for drinking with further addition, if necessary, of a conventional additive for beverages such as sweetenings, flavorings, sourings, preservatives, and others, or by dilution, if necessary, with water, carbonated water, animal milk or fermented milk, or soybean milk.

The present invention concerns typically a beverage useful as a source for supplying lactobacilli, and in such a case, the product after the step of proliferation of the lactobacilli can easily be placed aseptically in bottles or other containers as it is without sterilization. However, since there is also obtained the effect of improvement in flavor of a fruit juice by treatment of the lactobacilli according to the present invention, the product after the step of proliferation of the lactobacilli (and sometimes after the treatment with yeast as hereinafter described) can also be subjected to a low temperature sterilization, if only this effect of improvement in flavor is sought.

The fruit juice which has undergone lactic acid fermentation therein obtained as described above may be further subjected to alcohol fermentation to provide an alcoholic beverage. For example, if ordinary wine manufacturing steps are applied for the fruit juice subjected to the practice of the present invention, a wine of high quality can be obtained because the so-called malolactic fermentation with the lactobacilli is effected. Also, when fermentation is carried out moderately with the addition of a yeast to the lactobacillus beverage according to the present invention, it is possible to obtain a wine-like fermented beverage with an alcoholic content less than 1.0%, from which is removed diacetyl odor, which may sometimes be generated during lactobacillus fermentation.

Experimental examples

Example 1

Into 10 liters of mandarin orange juice (pH 3.5), 300 g of a diatomaceous earth (Hyflo Super-Cel®) was added, and the mixture was stirred for 30 minutes. After stirring, the diatomaceous earth was filtered off and the filtrate was sterilized thermally at 90°C for one minute. After the treated juice was cooled to room temperature, 10 ml of a starter (number of microorganisms: $1.2 \times 10^8$/ml) having *Lactobacillus casei* IFO 12004 cultured in a similarly treated orange juice was added thereto, and stationary cultivation was carried out at 35°C for 2 days. The resultant stock liquor (number of microorganisms: $2.2 \times 10^8$/ml) was bottled with capping in 200 ml bottles.

The bottled trial product was stored at room temperature for 50 days and then provided for tasting test. The number of microorganisms was found to be $3.4 \times 10^8$/ml, and the flavor was favorable with a mild sour taste.

Example 2

To 10 liters of mandarin orange juice treated similarly as in Example 1 was added 10 ml of a starter (number of microorganisms: $1.0 \times 10^8$/ml) having *Lactobacillus acidophilus* IFO 3205 cultured in a similarly treated orange juice, and stationary cultivation was carried out at 35°C for 2 days. The resultant stock liquor (number of microorganisms: $7.0 \times 10^7$/ml) was bottled with capping in 200 ml bottles.

The bottled trial product was stored at room temperature for 7 days and further at 5°C for 7 months before tasting test. The number of microorganisms was found to be $7.5 \times 10^8$/ml, and the flavor was also favorable.

Example 3

Into 10 liters of mandarin orange juice (pH 3.5), 300 g of a nylon 66 resin powder was added and the mixture was stirred for 30 minutes. After stirring, the resin powder was filtered off, and the filtrate was sterilized thermally at 90°C for one minute. After the treated juice was cooled to room temperature, 10 ml of a starter (number of microorganisms: $1.1 \times 10^8$/ml) having *Lactobacillus bulgaricus* IFO 3533 cultured in a similarly treated orange juice was added thereto, and stationary cultivation was carried out at 35°C for 3 days. The number of microorganisms in the resultant stock liquor was found to be $2.7 \times 10^7$/ml.

The bottled trial product was stored at room temperature for 40 days and then provided for tasting test. The number of microorganisms was found to be $9.4 \times 10^7$/ml and the flavor was also favorable.

Example 4

To 10 liters of apple juice (pH 3.7) treated similarly as in Example 3 was added 10 ml of a starter (number of microorganisms: $1.2 \times 10^8$/ml) having *Lactobacillus casei* IFO 12004 cultured in a similarly treated apple juice and cultivation was carried out at 35°C for 3 days. The resultant stock liquor was found to contain a number of microorganisms of $7.2 \times 10^7$/ml.

The bottled trial product was stored at room temperature for 40 days before tasting test. The number of microorganisms was found to be $1.5 \times 10^8$/ml, and the flavor was also favorable.

Example 5

To 10 liters of grapefruit juice (pH 3.3) treated similarly as in Example 3 was added 10 ml of a starter (number of microorganisms: $1.2 \times 10^8$/ml) having *Lactobacillus casei* IFO 12004 cultured in a similarly treated grapefruit juice, and cultivation was carried out at 35°C for 5 days. The resultant stock liquor was found to contain a number of microorganisms of $2.3 \times 10^7$/ml.

The bottled trial product was stored at room temperature for 40 days before tasting test. The number of microorganisms was found to be $3.3 \times 10^8$/ml, and the flavor was also favorable.

Example 6

Into 10 liters of grapefruit juice (pH 3.3), 500 g of a nylon 66 resin powder was added and the mixture was stirred for 30 minutes. After stirring, the resin powder was filtered off, and the filtrate was adjusted to pH 3.5 with addition of 3 g of calcium carbonate powder and then sterilized thermally at 90°C for one minute. After the treated juice was cooled to room temperature, 10 ml of a starter (number of microorganisms: $1.2 \times 10^8$/ml) having *Lactobacillus bulgaricus* IFO 3533 cultured in a similarly treated juice was added thereto, and stationary cultivation was carried out at 35°C for 3 days. The number of microorganisms in the resultant stock liquor was found to be $9.4 \times 10^7$/ml.

The bottled trial product was stored at room temperature for 40 days before trial drinking. The number of microorganisms was found to be $1.0 \times 10^8$/ml, and the flavor was also favorable.

Example 7

After 10 liters of white grape juice (pH 3.2) was treated similarly as in Example 6, a starter (number of microorgansims: $1.0 \times 10^8$/ml) having *Lactobacillus acidophilus* IFO 3205 cultured in a similarly treated juice was added thereto, and cultivation was carried out at 35°C for 5 days. The number of microorganisms in the resultant stock liquor was found to be $1.9 \times 10^8$/ml.

The bottled trial product was stored at room temperature for 30 days before tasting test. The number of microorganisms was found to be $2.2 \times 10^8$/ml, and the flavor was also favorable.

Examples 8—9

The following Tables 1 and 2 show the states of proliferation (35°C) of lactobacilli for various solid agents and the states of proliferation (35°C) of representative lactobacilli, respectively.

TABLE 1
Treatment of fruit juice and proliferation of lactobacilli (35°C)

| Treatment conditions of fruit juice | Tested microorganism, initial number | 3 days' culture | 6 days' culture |
|---|---|---|---|
| Diatomaceous earth | *L. casei* IFO 12004, $3.0 \times 10^3$/ml | $1.1 \times 10^7$ | $4.2 \times 10^8$ |
| Nylon 6 | " | $1.4 \times 10^7$ | $4.4 \times 10^8$ |
| Anion-exchange resin (Dowex®1) | " | $6.3 \times 10^7$ | $2.4 \times 10^7$ |
| Activated carbon | " | $1.8 \times 10^6$ | $1.3 \times 10^7$ |
| Cation-exchange resin (Dowex®50) | " | $<10^3$ | $<10^2$ |
| Ultrafiltration (membrane with cut-off M.W.=30,000) | " | $1.1 \times 10^5$ | $3.0 \times 10^6$ |
| Ultrafiltration (membrane with cut-off M.W.=10,000) | " | $3.6 \times 10^4$ | $1.2 \times 10^5$ |
| Filtration with filter paper (Toyo Roshi No. 2) | " | $6.0 \times 10^2$ | $3.0 \times 10^2$ |
| Centrifugation | " | $1.5 \times 10^3$ | $3.0 \times 10^2$ |
| Original juice with no treatment | " | $1.1 \times 10^3$ | $4.5 \times 10^3$ |
| Nylon 6 | *L. bulgaricus* IFO 3533, $10^4$/ml | — | $2.7 \times 10^7$ |
| "Dowex®1" | " | — | $7.5 \times 10^6$ |
| Centrifugation | " | — | $1.6 \times 10^4$ |

Note:
Sample:
100% mandarin organge juice (conc. reduced juice, pH 3.5)
Method of treatment of juice:
After pulp was removed by centrifugation of the juice, various solid agents were added in a proportion of 5%, and the mixture was stirred for 30 minutes, and then filtered; or alternatively only filtration was performed with a filter paper or an ultrafiltration membrane, and the resultant juice was sterilized at 90°C for 1 minute and provided for testing.

**0 113 055**

TABLE 2
Treatment of fruit juice and proliferation of lactobacilli, investigation of lactobacillus species, 35°C

| Lactobacillus species, treatment conditions of juice | Days for cultivation | | | |
|---|---|---|---|---|
| | 1 day | 2 days | 3 days | 5 days |
| L. casei IFO 12004 (initial number of microorganisms: $8.8\times10^4$) | | | | |
| Diatomaceous earth filtration | $9.0\times10^4$ | $6.9\times10^7$ | $4.0\times10^8$ | $7.6\times10^8$ |
| Filter paper No. 2 filtration | $1.3\times10^4$ | $<10^5$ | $<10^5$ | $8.3\times10^3$ |
| Centrifugation (8000 rpm×10 min.) | $5.0\times10^4$ | $<10^5$ | $<10^5$ | $<10^2$ |
| Control (untreated fruit juice) | $6.8\times10^3$ | $4.0\times10^2$ | $1.0\times10^2$ | $2.3\times10^3$ |
| L. acidophilus IFO 3205 (initial number of microorganisms: $8.8\times10^4$) | | | | |
| Diatomaceous earth filtration | $4.0\times10^4$ | $<10^5$ | $2.1\times10^7$ | $4.0\times10^8$ |
| Filter paper No. 2 filtration | $2.7\times10^4$ | $<10^4$ | $<10^4$ | $6.7\times10^3$ |
| Centrifugation (8000 rpm×10 min.) | $1.0\times10^4$ | $<10^4$ | $<10^5$ | $8.0\times10^2$ |
| Control (untreated fruit juice) | $4.1\times10^3$ | $3.0\times10^2$ | $1.0\times10^2$ | $8.8\times10^2$ |

Note:
Sample—Mandarin orange juice, 70% commercial product (pH 3.6)

**Claims**

1. A lactobacillus beverage which comprises a product of lactic acid fermentation of a fruit juice containing substantially no milk component and has a content of a homofermentative lactobacillus microorganism of at least $10^6$/ml and a pH of 4.0 at the highest.

2. A lactobacillus beverage according to Claim 1, wherein the lactobacillus is selected from the group consisting of Lactobacillus casei, Lactobacillus acidophilus and Lactobacillus bulgaricus.

3. A method for producing a lactobacillus beverage, which comprises bringing a fruit juice into contact with a solid agent selected from the group consisting of amide resins, diatomaceous earths, activated carbons and anion-exchange resins which comprise resins having quaternary ammonium groups and then proliferating homofermentative lactobacilli in said fruit juice at a pH of 4.0 at the highest substantially in the absence of a milk component until the content of the lactobacilli becomes at least $10^6$/ml.

4. A method for producing a lactobacillus beverage according to Claim 3, wherein the solid agent is an amide resin or diatomaceous earth.

5. A method for producing a lactobacillus beverage according to Claim 4, wherein the amide resin is selected from the group consisting of polyamides and insolubilized polyvinyl pyrrolidones.

6. A method for producing a lactobacillus beverage according to Claim 5, wherein the polyamide is selected from the group consisting of nylon 6 and nylon 66.

7

7. A method for producing a lactobacillus beverage according to one or several of the claims 3 to 6, wherein the solid agent is powdery or granular.

8. A method for producing a lactobacillus beverage according to one or several of the claims 3 to 7, wherein the solid agent is a diatomaceous earth, and contact between the fruit juice and the solid agent is accomplished by passing the fruit juice through the diatomaceous earth layer.

9. A method for producing a lactobacillus beverage according to one or several of the claims 3 to 8, wherein the lactobacillus is selected from the group consisting of *Lactobacillus casei, Lactobacillus acidophilus* and *Lactobacillus bulgaricus.*

**Patentansprüche**

1. Lactobacillus enthaltendes Getränk, enthaltend ein Produkt der Milchsäuregärung eines Fruchtsaftes, das im wesentlichen keine Milchkomponente enthält und einen Gehalt an einem homofermentativen Lactobacillus-Mikroorganismus von mindestens $16^6$/ml sowie einen pH-Wert von höchstens 4,0 aufweist.

2. Lactobacillus enthaltendes Getränkt gemäß Anspruch 1, dadurch gekennzeichnet, daß der Lactobacillus aus der Gruppe ausgewählt ist, die aus Lactobacillus casei, Lactobacillus acidophilus und Lactobacillus bulgaricus besteht.

3. Verfahren zur Herstellung eines Lactobacillus enthaltenden Getränks, dadurch gekennzeichnet, daß man einen Fruchtsaft mit einem festen Agens in Berührung bringt, das aus der Gruppe ausgewählt ist, die aus Amidharzen, Diatomenerden, Aktivekohlen und Anionenaustauscherharzen, die ein Harz mit quartären Ammoniumgruppen enthalten, besteht, und anschließend in diesen Fruchtsaft bei einem pH-Wert von höchstens 4,0 homofermentative Lactobacillus-Mikroorganismen praktisch in Abwesenheit einer Milchkomponente vermehrt, bis der Gehalt an Lactobacillus-Mikroorganismen mindestens $10^6$/ml betragt.

4. Verfahren nach Anspruche 3, dadurch gekennzeichnet, daß das feste Agens ein Amidharz oder Diatomenerde ist.

5. Verfahren gemäß Anspruch 4, dadurch gekennzeichnet, daß das Amidharz aus der Gruppe ausgewählt ist, die aus Polyamiden und unlöslich gemachten Polyvinylpyrrolidonen besteht.

6. Verfahren gemäß Anspruch 5, dadurch gekennzeichnet, daß das Polyamid aus der Gruppe ausgewählt ist, die aus Nylon-6 und Nylon-66 besteht.

7. Verfahren gemäß einem oder mehreren der Ansprüche 3 bis 6, dadurch gekennzeichnet, daß das feste Agens in Pulver- oder körniger Form vorliegt.

8. Verfahren gemäß einem oder mehreren der Ansprüche 3 bis 7, dadurch gekennzeichnet, daß das feste Agens Diatomenerde ist und die Berührung zwischen dem Fruchtsaft und dem festen Agens dadurch bewirkt wird, daß man den Fruchtsaft durch eine Schicht aus Diatomeneerde leitet.

9. Verfahren gemäß einem oder mehreren der Ansprüche 3 bis 8, dadurch gekennzeichnet, daß der Lactobacillus-Mikroorganismus aus der Gruppe ausgewählt ist, die aus Lactobacillus casei, Lactobacillus acidophilus und Lactobacillus bulgaricus besteht.

**Revendications**

1. Boisson à lactobacille, qui comprend un produit de fermentation d'acide lactique d'un jus de fruit ne contenant pratiquement pas de composant lacté et ayant une teneur d'un microorganisme de lactobacille homofermantant d'au moins $10^6$/ml et un pH de 4,0 au maximum.

2. Boisson à lactobacille suivant la revendication 1, caractérisée en ce que le lactobacille est choisi dans le groupe comprenant: *Lactobacillus casei, Lactobacillus acidophilus* et *Lactobacillus bulgaricus*.

3. Procédé de production d'une boison à lactobacille, qui consiste à amener un jus de fruit en contact avec un agent solide choisi dans le groupe comprenant les résines d'amide, les terres à diatomées, les charbons activés et les résines échangeuses d'anions qui englobent les résines comportant les groupes d'ammonium quaternaire, et ensuite à faire proliférer les lactobacilles homofermantants dans ce jus de fruit à un pH de 4,0 au maximum, essentiellement en l'absence de composant lacté, jusqu'à ce que la teneur des lactobacilles devienne d'au moins $10^6$/ml.

4. Procédé de production d'un boisson à lactobacille suivant la revendication 3, caractérisé en ce que l'agent solide est une résine d'amide ou une terre à diatomées.

· 5. Procédé de production d'une boisson à lactobacille suivant la revendication 4, caractérisé en ce que la résine d'amide est choisie dans le groupe comprenant les polyamides et les polyvinyl pyrrolidones insolubilisées.

6. Procédé de production d'une boisson à lactobacille suivant la revendication 5, caractérisé en ce que le polyamide est choisi parmi le Nylon 6 et le Nylon 66.

7. Procédé de production d'une boisson à lactobacille suivant l'une ou plusieurs des revendications 3 à 6, caractérisé en ce que l'agent solide est pulvérulent ou granulaire.

8. Procédé de production d'une boisson à lactobacille suivant l'une ou plusieurs des revendications 3 à 7, caractérisé en ce que l'agent solide est une terre à diatomées, et en ce que le contact entre le jus de fruit et l'agent solide est réalisé en faisant passer le jus de fruit à travers la couche de terre à diatomées.

9. Procédé de production d'une boisson à lactobacille suivant l'une ou plusieurs des revendications 3 à 8, caractérisé en ce que la lactobacille est choisi dans le groupe comprenant: *Lactobacillus casei, Lactobacillus acidophilus* et *Lactobacillus bulgaricus.*